# EUROPEAN PATENT SPECIFICATION

(11) **EP 4 381 380 B1**
(45) Date of publication and mention of the grant of the patent: **30.10.2024**
(21) Application number: 23718093.0
(22) Date of filing: 20.03.2023
(51) Int. Cl.: G06F 8/61

(54) **DYNAMIC MODIFICATION OF DIGITAL COMPONENTS**
DYNAMISCHE MODIFIKATION VON DIGITALEN KOMPONENTEN
MODIFICATION DYNAMIQUE DE COMPOSANTS NUMÉRIQUES

(30) Priority: 21.03.2022 US 202263322028 P
(43) Date of publication of application: 12.06.2024
(73) Proprietor: Google LLC, Mountain View, CA 94043 (US)
(72) Inventor: ZHU, Chunlei, Mountain View, California 94043 (US); KASHYAP, Chitra Kannan, Mountain View, California 94043 (US); JIN, Tianpeng, Mountain View, California 94043 (US); CHEN, Xi, Mountain View, California 94043 (US)
(74) Representative: Worley, Alexander John
(86) International application number: PCT/US2023/015643
(87) International publication number: WO 2023/183237

(56) References cited:
- US-A1- 2017 368 683

## Description

### BACKGROUND

This specification relates to digital component data processing and using data processing models to selectively modify digital components to include interface controls.

In a networked environment such as the Internet, first-party content providers can provide information for display in electronic documents, for example web pages or application interfaces. The documents can include first-party content provided by first-party content providers and third-party content provided by third-party content providers.
US 2017/368683 A1 describes, in accordance with its abstract, a user portrait based skill package recommendation device, comprising: an acquisition module, used for acquiring and collating the identity information of an intelligent robot user and the interaction information of the user and an intelligent robot, and acquiring the user portrait information of the user; an analysis module, connected to a skill package management platform at a cloud network terminal, and used for analyzing the user portrait information and associating a first skill package on the skill package management platform according to the user portrait information; and a recommendation module, used for acquiring the description information of each first skill package, and pushing the description information to the intelligent robot user.

### SUMMARY

This specification is generally related to systems and techniques for dynamically modifying digital components to include interface controls that enable users to control when subsequent actions (e.g., the installation of software) occurs. The system can distribute a digital component to the computing device, and the digital component can include a user interface control that enables a user that views the digital component to request an action to be performed at a later time. For example, the user interface control can be a remind-me-later (RML) control that causes the computing device to schedule a notification that reminds the user regarding the subject of the digital component.

An example digital component can include content related to software for installation at the computing device. For example, the digital component can include content related to the installation of a native application, a software patch, a security update, or another appropriate type of software component. In this example, an RML control can enable a user to schedule a reminder notification regarding the installation of the software rather than initiating the installation of the software immediately.

In general, one innovative aspect of the subject matter described in this specification can be embodied in methods including the operations of a digital component distribution system determining to distribute to a computing device a digital component that depicts content related to a particular subject. The digital component distribution system can use a data processing model and contextual information for the computing device to determine to include a remind-me-later user interface control with the digital component. In response to determining to include the remind-me-later user interface control, the digital component distribution system can modify the digital component to include the remind-me-later user interface control that, when interacted with by a user, causes the computing device to schedule a notification that reminds a user of the computing device of the subject of the digital component. The digital component distribution system can send the digital component with the remind-me-later user interface control to the computing device. Other implementations of this aspect include corresponding apparatus, systems, and computer programs, configured to perform the aspects of the methods, encoded on computer storage devices.

These and other implementations can each optionally include one or more of the following features. In some aspects, the contextual information can include a level of user engagement with an application executing on the computing device. The data processing model can select the remind-me-later user interface control based on a predicted likelihood that a user will activate the user interface control. The predicted likelihood can reflect a type of application in which the digital component will be displayed. The contextual information can include a type of application with which a user is currently interacting. The type of application can be one of a timed game, an untimed games, an ebook, a browser, or social media. The digital component distribution system can determine a schedule and modify the digital component to include the schedule. The modifying can result in the remind-me-later user interface control obscuring content within the digital component.

Another innovative aspect of the subject matter described in this specification can be embodied in methods including the operations of a computing device obtaining a digital component that includes a remind-me-later call-to-action, and the remind-me-later call-to-action can include a schedule. Using the remind-me-later call-to-action, the computing device can determine the schedule. The computing device can determine that the schedule was satisfied, and the computing device can present the call-to-action.

These and other implementations can each optionally include one or more of the following features. In response to a user interacting with the remind-me-later user interface control, the reminder schedule can be stored at the computing device. In response to determining that the reminder schedule is satisfied, a component installation system can provide a reminder. The component installation system can receive authorization from the user to perform the install, and in response to receiving the authorization, installing an actionable component. The contextual information can include signals from the device, and the signals can include at least one of time, geographic location and language of application. The reminder schedule can be based on at least one of time, a detected termination of an application, device is idle, level of engagement with an application executing on the device, and application publisher conditions.

Particular embodiments of the subject matter described in this specification can be implemented so as to realize one or more of the following advantages. By presenting timely reminders for a component installation, the system can improve user security and device performance. To begin, the system can present to a user a notification indicating that a component installation will improve device function. However, in some situations, the timing of the notification will not be conducive to the user performing the installation immediately, e.g., if the user is heavily engaged with another application. In such cases, the user might decline to perform the installation immediately and delay the installation indefinitely. Such delays can leave the device in a suboptimal state since installing a software component can increase device security and/or improve performance, e.g., by installing a component that includes bug fixes or that performs more efficiently than a component it replaces. By determining a favorable time to present a reminder, the system can increase the likelihood that the installation occurs, improving device function.

Using an RML control to delay an action associated with a digital component (e.g., installing software and/or displaying additional content) can result in improved user safety, for example, by reducing distraction when the user is engaged in sensitive actions, such as driving or operating machinery. In addition, when the system provides an RML control, the system can enable access to a digital module, e.g., by providing a notification that prompts a user to install a software application, at a time when it does not negatively affect user focus and concentration.

**A** digital component distribution system can use a model, e.g., a machine learning model, to determine when to include a RML control with a digital component based on various types of data. For example, the model can evaluate a user's level of engagement with an application with which a digital component will be displayed. By including a RML user interface control when the user is actively engaged (e.g., has at least a threshold level of engagement), the user is more likely to interact with the digital component to request a later notification for the subject of the digital component rather than ignore the digital component. If the subject of the digital component is a critical software patch or security update, this can increase the likelihood that the patch or update gets installed, resulting in increased device security and/or improved computer performance.

The model can also evaluate contextual signals related to the use of a computing device in ways that improve user safety. For example, if a digital component will be displayed with a map application, the model can consider whether the map is actively providing navigational instructions or being viewed in a stationary environment. In this example, the digital component distribution system may determine to include an RML user interface control unless the computing device is stationary to prevent the user from taking focus from driving to view content or install software.

By providing RML user interface controls based on context, the digital component distribution system can reduce computing resources that would be wasted by sending other types of digital components, e.g., install now or display now digital components that users would ignore based on context. For example, this reduces wasted bandwidth consumption by transmitting such digital components over a network, reduces processor cycles that would be used to display the digital components, and reduces battery consumption of mobile devices that display the digital components. Aggregated over thousands or millions of users, the computation savings are substantial.

**The** computing device can include a notification generator that is responsive to a schedule in a RML user interface control of a digital component. The notification generator can use the schedule and various contextual signals to determine when to display a notification to the user such that the notification does not distract the user from other tasks, thereby improving safety, reducing user frustration, and increasing the likelihood that a security patch or update gets installed.

The details of one or more implementations of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of an example environment in which a digital component distribution system distributes digital components.
FIG. 2 is a flow diagram of an example process for modifying and distributing digital components.
FIG. 3 is a flow diagram of an example process for installing software components in response to user interaction with an RML user interface control.
FIG. 4 is a block diagram of an example computer system.

Like reference numbers and designations in the various drawings indicate like elements.

### DETAILED DESCRIPTION

The need to install a software component on a user device can arise for numerous reasons. Commonly, a monitoring system can determine that installing a software component, which can include installing an updated version of a software component, will improve the operation of a computing device. For example, a software component that provides security monitoring can reduce the likelihood of a malware infestation. Similarly, upgrading a software application to a version with enhanced security using a software component can also reduce the likelihood of a malware infestation. In addition, some software components improve the usefulness of a computing device, for example, by providing productivity or entertainment function to the device's user.

To encourage users to install beneficial software components, a system can first provide a digital component that includes a user interface element, e.g., graphical or textual content that informs the user about the software component. Such a user interface element can enable the user to take action, for example, by including an "install now" button or simply by initiating the installation in response to user interaction with the digital component. Once selected by a user, the user interface element can cause the system to install the software component on the user device.

However, depending on the arrival time of the digital component, a user might be unwilling or unable to immediately permit the installation of the software component. For example, if the user is heavily engaged with an activity on the device, the user might be unwilling to disengage to authorize the installation. In another example, it can be unsafe for users who are driving to authorize an installation. Therefore, digital components that encourage the immediate installation of software components can be inappropriate in some circumstances. In fact, in some circumstances, such digital components could create hazards that arise from distracting the user.

Instead, as described in this specification, it can be beneficial to include a remind-me-later (RML) user interface element instead of, or in addition to, other user interface elements (e.g., "install now"). Including an RML element can provide technical benefit by increasing the likelihood that key software components (e.g., for bug fixes, anti-malware, monitoring, etc.) are installed in a timely manner. In addition, RML can provide safety benefits by reducing the likelihood that a user will be distracted at a sensitive time (e.g., when driving or operating machinery). The system can analyze various signals to determine whether an RML user interface element should be included in the digital component, as described in detail below.

RML can also be beneficial in cases where the reminder relates to digital content instead of, or in addition to, installable components. The digital content can be important to a user, e.g., a notification to take a medication, and if the timing is not suitable for the user to review such content, relevant information can be lost. For example, a notification to take a medication can be important to a user's health, but if the user is driving, presenting the notification is unlikely to result in an immediate action. In such cases, user interface element can include an RML element in addition to, or instead of, links to digital content. If the user selects the RML element, the system can determine a more appropriate time to deliver the notification. Since an RML can apply to installable components, digital content, etc., this specification uses the term "digital module" to refer broadly to various digital resources, which can include digital content, installable components, and so on.

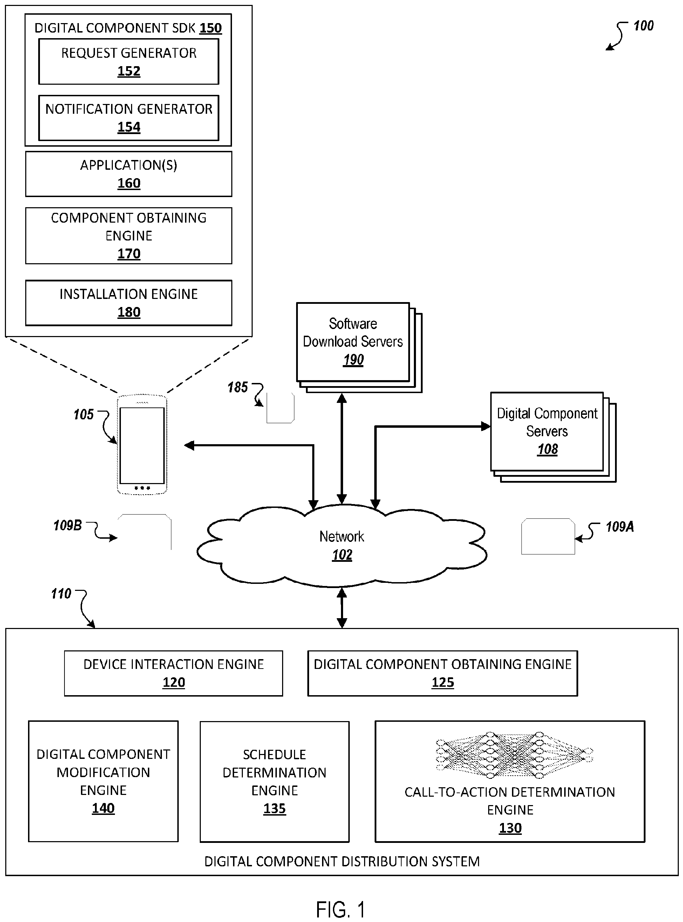

FIG. 1 is a diagram of an example environment 100 in which a digital component distribution system 110 distributes digital components. The example environment 100 includes a network 102, such as a local area network (LAN), a wide area network (WAN), the Internet, or a combination thereof. The network 102 connects a digital component distribution system 110, digital component servers 108, software download servers 190, and computing devices 105. The environment 100 can include many computing devices 105, digital component servers 108, and software download servers 190.

A computing device 105 is an electronic device that is capable of requesting and receiving resources over the network 102. Example computing devices 105 include personal computers, mobile communication devices, wearable devices, personal digital assistants, and other devices that can send and receive data over the network 102. A computing device 105 typically includes user applications, such as a web browser, to facilitate the sending and receiving of data over the network 102, but native applications executed by the computing device 105 can also facilitate the sending and receiving of data over the network 102. Computing devices 105, and in particular personal digital assistants, can include hardware and/or software that enable voice interaction with the computing devices 105. For example, the computing device 105 can include a microphone through which users can submit audio (e.g., voice) input, such as commands, search queries, browsing instructions, smart home instructions, and/or other information. Additionally, the computing devices 105 can include speakers through which users can be provided audio (e.g., voice) output. A personal digital assistant can be implemented in any computing device 105, with examples including wearables, a smart speaker, home appliances, cars, tablet devices, or other computing devices 105. Computing devices 105 can also include video streaming devices and gaming devices, e.g., gaming consoles.

**A** gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally, or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

**A** client device 110 can applications 112, such as web browsers and/or native applications, to facilitate the sending and receiving of data over the network 105. A native application is an application developed for a particular platform or a particular device (e.g., mobile devices having a particular operating system). Operations described as being performed by the client device 110 can be performed by the application 112 and operations described as being performed by the application 112 can be performed by another component of the client device 110. A client device 110 can include many different types of applications.

A computing device 105 typically includes applications 160, such as web browsers and/or native applications, to facilitate the sending and receiving of data over the network 102. A native application is an application developed for a particular platform or a particular device, e.g., for mobile devices having a particular operating system. Publishers can develop and provide, e.g., make available for download, native applications to the computing devices 105. A web browser can request a resource from a web server that hosts a website of a publisher, e.g., in response to the user of the computing device 105 entering the resource address for the resource in an address bar of the web browser or selecting a link that references the resource address. Similarly, a native application can request application content from a remote server of a publisher.

A computing device 105 also typically includes an installation engine 180 that can install applications on the computing device 105. The installation engine 180 can obtain a software component 185 (e.g., from a software download server 190) and use the software component to perform the install. In one example, the Android operating system includes a "Packagelnstaller" installation engine that accepts an install package, called an "Android Package," that performs application installations. The install package can include the assets related to the applications, such as code, resources, certificates, manifest files, etc. required to perform the install. The installation engine 180 can use the instructions in the install package to install the application.

The installation engine 180 can obtain a software component 185 (e.g., an install package) from a component obtaining engine 170 also present on the computing device 170. The component obtaining engine 170 can interact with a software download server 190 through the network 102 to obtain software components. For example, the component obtaining engine 170 can deliver a description of a software component (e.g., a name, a unique identifier such as a uniform resource identifier, a description of the component function, and so on) to the software download server 190, and the software download server 190 can provide the software component 185. In some implementations, the component obtaining engine 170 is a module within an installation engine 180 and is not a separate component.

Some resources, application pages, or other application content can include digital component slots for displaying digital components with the resources or application pages. The slots can include code that requests that a digital component software development kit (SDK) 150 or other appropriate code (e.g., engine, module, application, etc.) send a request for a digital component to the digital component distribution system 110. The digital component SDK 150 can include a request generator 152 and a notification generator 154 (described below). The request generator 152 can generate a digital component request and send the digital component request to the digital component distribution system 110 in response to receiving a request from a digital component slot.

A digital component server 108 can provide digital components 109A to the digital component distribution system 110 for distribution to computing devices 105. As used throughout this document, the phrase "digital component" refers to a discrete unit of digital content or digital information (e.g., a video clip, audio clip, multimedia clip, image, text, or another unit of content). A digital component can electronically be stored in a physical memory device as a single file or in a collection of files, and digital components can take the form of video files, audio files, multimedia files, image files, or text files and include advertising information, such that an advertisement is a type of digital component. For example, the digital component may be content that is intended to supplement content of a web page, application content (e.g., an application page), or other resource displayed by an application. More specifically, the digital component may include digital content that is relevant to the resource content, e.g., the digital component may relate to the same topic as the web page content, or to a related topic. The provision of digital components can thus supplement, and generally enhance, the web page or application content. A digital component can include actionable user interface elements such as buttons (e.g., defined in scripts or other code) and hyperlinks.

The digital component server 108 can provide digital components 109A in response to digital component requests. A digital component request can specify properties of a requested digital component 109A, and the digital component server 108 can provide a digital component 109A that has the properties. For example, a digital component request can specify interest in a particular software component, such as a game, and the digital component server 108 can provide a digital component relevant to the game. In one example, the digital component server 108 can provide a digital component 109A that provides information about the game.

A digital component request can include contextual information that can be used to select a digital component. This contextual information can include information about an application 160 in which a digital component will be displayed, a geographic location of the computing device 105 (e.g., coarse geographic information), a spoken language used by the application 160, and/or other appropriate contextual information.

The digital component distribution system 110 can include a device interaction engine 120, a digital component obtaining engine 125, a call-to-action determination engine 130, a schedule determination engine 135, a component modification engine 140. The digital component distribution system 110 can interact over a network (such as the network 102) with computing devices 105 and one or more digital component servers 108.

The device interaction engine 120 can communicate with the computing devices 105 over the network 102 or over a direct connection, such as an Ethernet cable. The device interaction engine 120 can communicate with the devices 105 over any appropriate networking protocol such as the Transport Communication Protocol / Internet Protocol (TCP/IP) or Hypertext Transfer Protocol (HTTP).

The digital component obtaining engine 125 can receive an indication that a computing device 105 should receive a digital component 109A. For example, a user of the computing device 105 can request an electronic document. In some cases, the user can request the electronic document directly, e.g., by providing a Uniform Resource Locator to a web browser). In some cases, the user can request the electronic document indirectly, e.g., by providing search terms to a search engine. The electronic document can include a tag or script that causes the computing device 105 to request additional content, such as the digital component 109A, from a data source when the given electronic document is processed (e.g., rendered or executed) by a computing device 105.

In some situations, a given electronic document can include a digital component tag or digital component script that references the digital component distribution system 110. In these situations, the digital component tag or the digital component script is executed by the computing device 105 when the given electronic document is processed by the computing device 105. Execution of the digital component tag or digital component script configures the computing device 105 to generate a request for digital components 109A (referred to as a "component request"), which is transmitted over the network 102 to the digital component distribution system 110. For example, the digital component tag or digital component script can enable the computing device 105 to generate a packetized data request including a header and payload data. The digital component request can include event data specifying features such as a name (or network location) of a server from which media is being requested, a name (or network location) of the requesting device (e.g., the computing device 105), and/or information that the digital component distribution system 110 can use to select one or more digital components provided in response to the request. The component request can be transmitted, by the client device 105, over the network 102 (e.g., a telecommunications network) to a server of the digital component distribution system 110.

In response to receiving an indication that a computing device 105 should receive a digital component, the digital component obtaining engine 125 can request a digital component 109A from one or more of the digital component servers 108. The digital component obtaining engine 125 can then accept a digital component 109A from the digital component server(s) 108. In some implementations, the digital component distribution system 110 stores digital components or information about digital components locally such that the digital component distribution system 110 can select and provide digital components in response to requests without interacting with the digital component servers 108.

The call-to-action (CTA) determination engine 130 can determine whether to include a CTA, e.g., a RML control, with a digital component and, if so, select a CTA appropriate for the digital component 109A, the device 105 (including users of the device), or both. The CTA determination engine 130 can include one or more models 135 for determining whether to include a call to action and these models can include trained machine learning models. Each model can be configured to determine whether to include a CTA interface control with a digital component and/or select a CTA control to include with the digital component. Appropriate machine learning models 135 can include a neural network, a decision tree, a gradient boosted decision tree, or another type of machine learning model appropriate for selecting a CTA. The CTA determination engine 130 can include a rule evaluation engine in addition to, or instead of, one or more machine learning models. The CTA determination engine 130 can evaluate the rules against various criteria and/or parameters to determine whether to include a CTA with a digital component that is selected for display at the computing device 105 and, if so, which CTA to include.

A CTA interface control, which is also referred to as a CTA in this document for brevity, can indicate an action requested of a user of a computing device 105 and can include a control that enables the user to initiate the action. For example, a CTA can request that a user authorize the immediate installation of a software component or that a user authorize the display of information, such as a web page in a web browser. The CTA control can be a displayed button or icon that is displayed by the computing device 105 (e.g., over a portion of the digital component) and/or an audio prompt for voice input to initiate the action.

In another example, a CTA can request that the user authorize the computing device 105 to provide a reminder related to the digital component at some time in the future. This reminder can be in the form of a notification to take an action, such as installing a software component. The software component can be a complete application, such as a game or a personal productivity application, or an update to an application currently installed on the computing device 105. In another example, the CTA can request that the user authorize a reminder to display digital content, such as a web page, that is related to content of the digital component. A reminder CTA can be referred to as a "remind me later" (RML) CTA since the CTA is requesting the user to authorize the computing device 105 to provide a reminder (e.g., to install a software component or display digital content) to a user at a future point in time.

A CTA can be encoded in any appropriate format, such as a structured text format including Extensible Markup Language (XML). For example, a CTA can be encoded in XML, and can take the form shown in Listing 1, below.

| |
|---|
| ```
                          <CALL-TO-ACTION>
                           <ACTION-TYPE> INSTALL </ACTION-TYPE>
                           <COMPONENT> Security Update 42 </COMPONENT>
                           ...
                          </CALL-TO-ACTION>
                          <CALL-TO-ACTION>
``` |

### Listing 1

The example in Listing 1 illustrates two CTA types. In the first example, the CTA has an action type "install," which can indicate that the system is seeking the user's authorization to install the software component identified as "security update 42." In the second example, the CTA has an action type "display," which can indicate that the system is seeking the user's authorization to display the content "component.html" located at the web site example.com.

When the CTA is a RML CTA, a schedule determining engine 135 can produce a reminder schedule. The reminder schedule can indicate one or more conditions that, when satisfied, cause the digital component SDK 150 (described further below) or another appropriate component of the computing device 105 or the digital component distribution system 110 to send a reminder to the user. A reminder schedule can be encoded in XML (or other appropriate format) and can include an indicator of the device, the condition(s) that trigger a reminder, the action type, an indication of the component, and so on. For example, a reminder schedule can be encoded as illustrated in Listing 2, below.

| |
|---|
| ```
              <REMINDER-SCHEDULE>
               <DEVICE> 5356 </DEVICE>
               <CONDITIONS>
                <CONDITION>
                 <TYPE> TIMER </TYPE>
                 <DURATION> 120 </DURATION>
                </CONDITION>
               </CONDITIONS>
               <ACTION-TYPE> INSTALL </ACTION-TYPE>
               <COMPONENT> Security Update 42 </COMPONENT>
               ...
              </REMINDER-SCHEDULE >
``` |

### Listing 2

In this example, the reminder relates to an install action of "security update 42" on device "5356." The single triggering condition is the expiration of a timer that is set for 120, which can be interpreted as 120 minutes, or 2 hours.

Note that while the schedule determination engine 135 is illustrated as a component in the digital component distribution system 110, the schedule determination engine 135 can instead be included on the computing device 105. In some implementations, a schedule determination engine 135 can exist on both the digital component distribution system 110 and the computing device 105. In such cases, the schedule produced by a schedule determination engine 135 on the computing device 105 can produce a schedule that is combined with a schedule produced by the digital component distribution system 110 or the schedule determination engine 135 on the computing device 105 can replace the schedule produced by the digital component distribution system 110.

In cases where the CTA determination engine 130 selects a RML CTA, the CTA can include a reminder schedule produced by the schedule determination engine 135 and the CTA to be presented when the reminder is shown. An example is illustrated in Listing 3 below.

| |
|---|
| ```
             <CALL-TO-ACTION>
              <ACTION-TYPE> REMIND-ME-LATER </ACTION-TYPE>
             <CALL-TO-ACTION>
               <ACTION-TYPE> INSTALL </ACTION-TYPE>
               <COMPONENT> Security Update 42 </COMPONENT>
             </CALL-TO-ACTION>
             ...
             <REMINDER-SCHEDULE>
             <CONDITIONS>
              <CONDITION>
                <TYPE> TIMER </TYPE>
                <DURATION> 120 </DURATION>
               </CONDITION>
             </CONDITIONS>
             <ACTION-TYPE> INSTALL </ACTION-TYPE>
             ...
             </REMINDER-SCHEDULE >
             </CALL-TO-ACTION>
``` |

### Listing 3

In some implementations, multiple CTAs can be included. For example, the system can provide to the user both the option to install now and an option for a reminder. For example, Listing 4 illustrates an element that includes two calls-to-action, as shown below.

| |
|---|
| ```
 <CALLS-TO-ACTION>
 <CALL-TO-ACTION>
   <ACTION-TYPE> REMIND-ME-LATER </ACTION-TYPE>
   <CALL-TO-ACTION>
    <ACTION-TYPE> INSTALL </ACTION-TYPE>
    <COMPONENT> Security Update 42 </COMPONENT>
   </CALL-TO-ACTION>
    ...
   <REMINDER-SCHEDULE>
    <CONDITIONS>
     <CONDITION>
      <TYPE> TIMER </TYPE>
      <DURATION> 120 </DURATION>
     </CONDITION>
    </CONDITIONS>
    <ACTION-TYPE> INSTALL </ACTION-TYPE>
   ...
   </REMINDER-SCHEDULE >
  </CALL-TO-ACTION>
  <CALL-TO-ACTION>
   <COMPONENT> Security Update 42 </COMPONENT>
   ...
  </CALL-TO-ACTION>
 </CALLS-TO-ACTION>
``` |

### Listing 4

The digital component modification engine 140 can accept a digital component 109A and produce a modified digital component 109B. In some implementations, the digital component 109A is an HTML document, and the digital component modification engine 140 inserts a CTA, e.g., the CTA illustrated in Listing 3, to produce the modified digital component 109B. The CTA includes an interface control, such as a button, a hyperlink, or a voice prompt, that, when activated by a user, causes the action of the CTA to occur. That is, the application 160 displaying the digital component or the digital component SDK 150 can monitor for the interaction and, if detected, perform the action. For example, an RML control can include a script or other code that causes the computing device 105 to send a request to the schedule determination engine 135 to schedule a reminder for the digital component. This request can include data identifying the digital component that was presented with the RML control and, if the schedule determination engine 135 is not part of the computing device 105, data identifying the computing device 105 to receive the reminder later.

A digital component that has been modified to include a CTA can also initiate another action if the user interacts with portions of the digital component other than the CTA. For example, the CTA can be displayed in a portion of the digital component. If the user interacts with an area of the digital component outside of that portion, the application 160 or digital component SDK can perform a different action. In a particular example, a digital component for downloading a native application can include a link to download the application or a reference to an application store that enables the download of the application to the computing device 105. This digital component can also include an RML CTA that enables the user to request that the computing device 105 (or another device that the user logs into) remind the user to download the application at a later time. This gives the user the option to download the application immediately or request a reminder to download the application later depending on which part of the digital component the user selects.

In some implementations, the digital component modification engine 140 can select previously modified versions of the digital component based on the selected CTA for the digital component. For example, rather than modifying the digital component at request time like described above, the digital component distribution system 110 can store multiple versions of a digital component, each having a different CTA and/or no CTA.

The digital component modification engine 140 can provide the modified digital component 109B to the device interaction engine 120 for delivery to the device 105. The device interaction engine 120 can, in turn, provide the modified digital component to the computing device 105 for display with the application 160, e.g., along with other content of the application 160.

In some implementations, the digital component modification engine 140 is included on the client device 105. In such cases, digital components are obtained by the computing device 105, and the computing device modifies the digital components as described above.

To enable the installation of software components, a computing device 105 can include a digital component SDK 150. In some implementations, the digital component SDK 150 can execute on a separate computing system and communicate with the computing device 105 over the network 102. Other appropriate types of software can also be used in addition to, or in place of, the SDK 150.

The notification generator 154 can determine reminder schedules from the reminder schedules included in a modified digital component 109B when the modified digital component 109B includes a RML CTA. (As noted above, in some implementations, reminder schedules can be generated on the computing device 105 or on another computing device coupled to the computing device 105.) When one or more conditions in a reminder schedule are satisfied, the notification generator 154 can cause the computing device 105 to present a reminder. The notification generator 154 can present the CTA included in the modified digital component 109B to the user, for example, by displaying the CTA on the user interface of the device 105.

As noted above, the CTA can include an actionable component, such as a button, hyperlink or voice prompt, that, when activated by a user, cause the action to occur. The digital component SDK 150 can receive an indication that the actionable component has been selected.

In response to receiving an indication that the actionable component has been selected or otherwise interacted with, the digital component SDK 150 can take an action appropriate for the CTA. For a RML CTA, the digital component SDK 150 can store information relating to the reminder and schedule the notification. As illustrated in Listing 3, a RML CTA can include a schedule element and a second CTA, specifically the CTA that will be displayed when the schedule defined in the schedule element is satisfied.

In another example, for an "install" CTA, including an install CTA included within a RML CTA, the software component obtaining engine 170 can obtain a software component 185 from one or more software download servers 190. The software component obtaining engine 170 can send a request over the network 102 to a software download server 190, and the request can include an indication of the software component requested. For example, as illustrated in Listing 3, the CTA can include a component element that indicates the component to be installed.

In some implementations, the CTA itself can include the software component. In such implementations, the digital component SDK 150 can extract the software component from the CTA instead of, or in addition to, obtaining it from a software download server 190. As described above, the software component can be an install package.

Once the software component obtaining engine 170 has received the software component 185, it can deliver the software component 185 to the installation engine 180 in the digital component SDK 150 on the computing device 105. The installation engine 180 can then perform the installation.

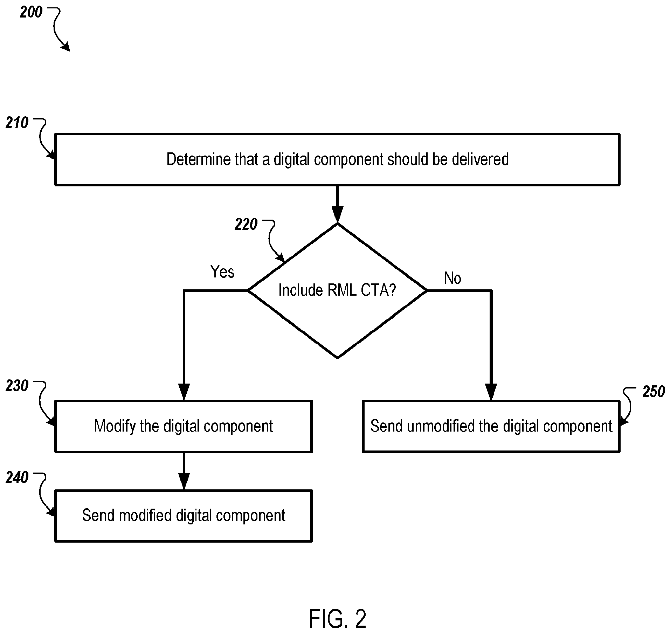

FIG. 2 is a flow diagram of an example process 200 for modifying and distributing digital components. For convenience, the process 200 will be described as being performed by a system for distributing digital components, e.g., the digital component distribution system 110 of FIG.1, appropriately programmed to perform the process. Operations of the process 200 can also be implemented as instructions stored on one or more computer readable media which may be non-transitory, and execution of the instructions by one or more data processing apparatus can cause the one or more data processing apparatus to perform the operations of the process 200. One or more other components described herein can perform the operations of the process 200.

The system determines (210) that it should deliver a digital component that depicts content related to a particular subject to a computing device. In some implementations, the system can receive a request for the digital component from a computing device. In some implementations, the system can receive a request for another digital component, and the system can determine that the digital component should be provided in addition to, or instead of, the other digital component. In some implementations, the system can monitor signals, for example, signals from a computing device, and determine that a digital component should be delivered. Such signals can include the location of the device, language of the device, user interaction with an application (e.g., opening an application, closing an application, visiting a web page, making an in-app purchase, other use patterns of an application, etc.), language of an application with which the user is interacting, user interaction with a device (e.g., restarting the device, changing a setting, etc.), and so on.

In some implementations, the system makes the determination based on a monitoring action on the computing device. For example, a security monitoring component can determine that an application should be installed or upgraded to improve security, and the system can provide a digital component that recommends the installation.

In some implementations, the system makes the determination based on permissions set at the computing device. For example, the system can determine whether the computing device has enabled or disabled notifications. In another example, the system can determine whether the publisher of the digital component has notification permissions.

In some implementations, the system makes the determination in response to a notification. For example, the system can receive a notification from a security administrator that an actionable component should be installed, and the system can provide a digital component that requests that the device owner perform the install.

The system determines whether to include an RMA CTA interface control with the digital component (220). The system can use one or more models, e.g., trained machine learning models, to determine whether to include a CTA with a digital component, and if so, which CTA to include. The system can first determine to include a CTA, then determine whether the CTA is a RML CTA. In some implementations, the system can use a model to determine whether to include an RTL CTA or not. In this example, the system would not have to select from multiple CTAs.

To select a CTA, in some implementations, the system uses a data processing model or machine learning model to determine the CTA that is predicted to be most likely to result in a recommended action of the CTA being taken by the user. The model can operate on contextual information from the computing device and/or contextual information related to the environment in which the computing device is operating, such as the geographic location, time of day, and so on. Such information can be provided with a request sent by the computing device.

As noted with reference to FIG. 1, the system can also determine that multiple CTAs should be included. In some implementations in which the subject of a digital component is the installation of a software component, the system uses a model such as a machine learning model that has been trained to predict the CTA that is most likely to result in the software component being installed. The machine learning model can process feature values for various features to create predictions. These features can include features related to context of the computing device, features related to the computing device itself, and/or features related to the user of the computing device.

In some implementations, the feature values can include feature values for context information that can include information about applications currently installed and/or currently running on a computing device. For example, such context information can include versions of the applications, the type of application with which a user is currently interacting (e.g., timed game, untimed games, ebook, browser, social media, etc.), the amount of time with which the user has been interacting with the application, the amount of interface interactions the system had with the application, the rate of user interaction with the application, what is occurring within an application, and/or other appropriate contextual information related to applications of the computing device.

For example, if a user is currently interacting with a timed game, the user is less likely to interact with a digital component that causes the device to navigate to a web page or other resource and interrupt the game. In this example, if an RML control is provided with the digital component and the user is interested in being reminded about the subject matter of the digital component, the user can simply interact with the RML control to request a reminder be sent at a later time and continue playing the time game.

In some implementations, the feature values can include feature values for information about the computing device. For example, feature values can include information about the device's location (e.g., coarse location information such as the country in which the computing device is currently located), the network (e.g., type of network such as cellular, wi-fi, etc., or the current data speed of the network) providing connectivity for the computing device, the amount of free memory and/or data storage of the computing device, the a measure of processor utilization (e.g., currently and/or during a time period leading up to the request for the digital component), the speed at which the computing device is moving, the direction at which the device is moving, an/or other appropriate information about the computing device.

For example, if the network has low bandwidth, a user may not want to download a large security patch or other large file until being connected to a faster network. In this example, an RML control can be provided with the digital component and the user can interact with the RML control to request a reminder to download the large file later. The schedule determination engine 135 can also use network information to trigger the reminder. For example, the schedule determination engine 135 can trigger the reminder when the computing device connects to a faster network.

In another example, if the memory or storage space of the computing device is low, e.g., less than a threshold amount of available space or less than the amount of space required to download a file linked to by the digital component, the system can determine to include an RML control. This prevents download errors that would occur if the computing device lacks sufficient space for storing the file.

In some implementations, the feature values can include feature values for information regarding a user's interaction with a digital component using alternative CTAs. For example, feature values can include the amount of time a user interacts with a digital component, whether a user interacts with a digital component that includes a RML CTA, whether a user interacts with a digital component that does not include a RML CTA, whether the software component is activated (installed or displayed) after an interaction with the CTA, and so on.

For example, the feature values can include feature values related to the frequency with which the user interacts with RML CTAs and other CTAs. This can include overall frequencies in all contexts or frequencies of interactions in contexts that are similar to or the same as the user's current context.

The machine learning model can produce, for each CTA type, a value that represents the likelihood that the CTA will result in the user performing the action, e.g., activating the digital module (e.g., installing a software component) or requesting a reminder. Examples of CTAs can include RML, install now, and click-to-call (CTC). In some implementations, the system can select the CTA that has the highest predicted likelihood that the user will activate the digital module. In some implementations, the system can select all CTAs that have a predicted likelihood that is above some threshold.

**The** machine learning model can be trained in a supervised or non-supervised manner using the features described above and/or other features. For example, the system can train the machine learning model using labeled training data that includes, for each set of feature values, a label that indicates whether a user interacted with a CTA when presented in an environment consistent with (e.g., matching or sufficiently similar to) the feature values.

**The** system can provide features values for a current digital component request as input to the machine learning model. These feature values can include any combination of feature values described herein.

In some implementations, the system can select the minimum number of CTAs in which the sum of the predicted likelihoods exceeds a configured threshold. For example, if the predicted likelihood for a RML is 0.5, the predicted likelihood for install now is 0.3, and the threshold is 0.7, the system will select both RML and install now. However, if the threshold is 0.5, the system will select only the RML.

In some implementations, the system uses rules to determine a CTA. A rule can be of the form "if <condition> then <CTA>." The conditions can relate to features listed above, i.e., applications currently running on a computing device, versions of the applications, the application with which a user is currently interacting, etc. A condition can be a Boolean expression that relates to one or more features. For example, a rule might state: "if <user is interacting with a game> then <CTA is RML>." The rules can be listed in order, and the CTA is selected from the first rule for which the condition is satisfied. The rules can have a default CTA that is selected if no condition is satisfied.

If the system determines that the digital component should include the RML CTA, the system modifies (230) the digital component to include the RML CTA. The system's modification action is determined by the format of the digital component.

For example, if the digital component is an HTML document, the system can embed the call to action (e.g., in the form described in reference to FIG. 1) in the HTML document. If the digital component is an executable component, the system can include executable code that, when executed, causes the CTA to be displayed. In some implementations, the RML interface control is placed within a blank area of the digital component. In some implementations, the RML interface control is placed such that it obscures all or part of the content of the digital component.

In some implementations, the system determines a schedule and includes the determined schedule in the RML CTA. In some implementations, the schedule can follow a configured template. The template can include criteria related to a variety of metrics that can include the speed the device is moving, the level of engagement with an application, whether the device is connected to a network, the speed of a network connection, a CPU utilization, a fixed duration, and so on, as described further below. For example, the template might specify: (i) the device must be traveling at less than two miles per hour, (ii) the user has switched active applications within a fixed period of time (e.g., 5 seconds), (iii) the device is connected to a network that supports 10 megabits per second (Mbps) bandwidth; and (iv) the CPU utilization is below 20%.

In some implementations, the schedule can depend on the digital component, the digital module that will be displayed when the CTA is activated, the action type in the CTA (e.g., display or install), and so on. For example, if the action type is install, and the install package to be installed is large, the system might determine that a relatively fast network (e.g., faster than 20 Mbps) is required, and set that criterion accordingly. The dependencies between such factors and the schedule properties can be stored by the system in a table or database.

In some implementations, the schedule can be determined by a data processing model, such as a machine learning model, that is configured to produce a schedule that is predicted to maximize the likelihood that the user will respond to the CTA that is presented according to the schedule. A machine learning model can be trained on examples that include feature values, such as the types of feature values described in reference to operation 220, and an outcome that indicates whether the user activated the CTA. A positive outcome can be defined as one in which the user interacted with the CTA, and a negative outcome can be defined as one in which the user did not interact with the CTA.

The system can include criteria in the schedule based on a time at which the user interacted with the RML control. In some implementations, the schedule includes a specified duration after the user interacted with the RML. For example, the system can schedule the notification to occur one hour after the user interacted with the RML control.

The system can include criteria in the schedule based on user engagement with an application with which the actionable component was displayed. In some implementations, the system can schedule a notification when the level of user engagement decreases to an appropriate level. For example, the schedule can be satisfied when the level of engagement falls below a threshold level of engagement. In another example, the schedule can be satisfied when the user closes the application. In this way, the notification does not frustrate the user when the user is engaged with the application.

The schedule can include criteria related to signals produced by the device. In some implementations, the schedule can be satisfied when the signals indicate an appropriate level of safety. For example, the system can display a notification when the speed of travel (e.g., determined by motion sensors and/or a Global Positioning Satellite (GPS) on the device) reaches a safe level, which can be stationary - that is, no motion. In another example, the system can display a notification when a navigation application indicates that the device has reached its destination.

The system can include criteria in the schedule based on current properties of the device. In some implementations, the system can monitor properties of the device and schedule a notification when one or more criteria are satisfied. For example, the schedule can cause the system to display a notification when the device is connected to a certain network type (e.g., a wireless fidelity (Wi-Fi) network) or at or above a certain network speed (e.g., at or above 100 megabits per second). In another example, the system can display a notification when the available battery percentage exceeds a configured threshold. In another example, the system can display a notification when the CPU utilization is idle or below a configured threshold.

The schedule can include criteria set by a publisher of the digital component, the publisher of the software component or combinations of the two. In some implementations, the digital component can include scheduling rules, for example, scheduling rules provided by the publisher. The rules can include positive predicates and negative predicates where positive predicates include conditions under which the notification should be scheduled and negative predicates include conditions under which the notification should not be scheduled. The system can evaluate the predicates using conventional rule-evaluation techniques to determine a schedule that satisfies the positive predicates without satisfying a negative predicate. For example, a positive predicate can indicate that a digital component should be presented when a user initiates a certain application, and a negative predicate can indicate that the digital component should not be displayed when the device is moving in excess of 10 miles per hour (mph). In this example, the system would then display the digital component the first time an application was opened when the device was not moving at 10 mph.

The schedule can include any factor described above or any combination of the factors described above. In some implementations, the system can schedule a notification when a Boolean combination of factors is satisfied. For example, the system can display a notification when a user's level of interaction with an application reaches a desired threshold and when the user is not in motion.

The system sends (240) the digital component with the remind-me-later user interface control to the computing device. The system can send the digital component using any appropriate protocol. For example, the system can send the digital component over a network using HTTP or TCP/IP.

Returning to operation 250, if the system determines to not include a CTA, the system sends the unmodified digital component to the computing device (250).

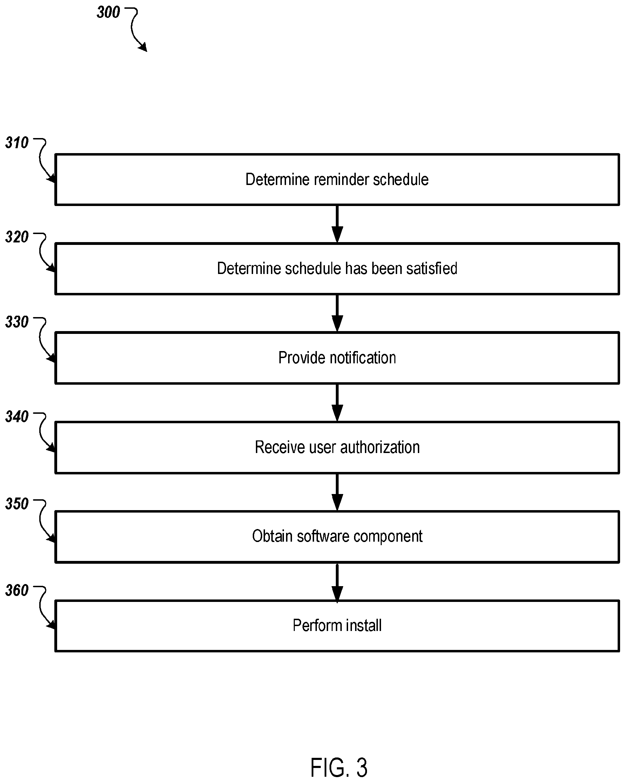

FIG. 3 is a flow diagram of an example process for installing software components in response to a "remind me later" CTA. For convenience, the process 300 will be described as being performed by a system for installing software components, e.g., the digital component SDK 150 of FIG. 1, appropriately programmed to perform the process. Operations of the process 300 can also be implemented as instructions stored on one or more computer readable media which may be non-transitory, and execution of the instructions by one or more data processing apparatus can cause the one or more data processing apparatus to perform the operations of the process 300. One or more other components described herein can perform the operations of the process 300.

The system obtains (310) a reminder schedule associated with a digital component. First, the system can determine whether the digital component includes a CTA. In some implementations, the system can inspect the digital component to determine whether it contains a CTA element, as described in reference to FIG. 1.

If the digital component contains a CTA, the system determines whether the CTA is a RML CTA. In some implementations, the system can inspect the CTA to determine whether the action type is RML. For example, the CTA can include an action type element with a value of "REMIND-ME-LATER" as illustrated in Listing 3. The system can determine from that value that the CTA is RML.

Having determined that the CTA is RML, the system can identify the schedule. In some implementations, the system can again inspect the CTA to determine the schedule. For example, the CTA can include a schedule element, as illustrated in Listing 3. The system can determine the scheduling by parsing the schedule element of the CTA using conventional XML parsing techniques.

The system determines (320) that the schedule has been satisfied. The system monitors the device, which can include user interaction and one or more timers, and determines when the schedule has been satisfied. For example, if the schedule specifies that the reminder should be sent at "the earlier of 1 hour from when the reminder occurs and when the user changes active applications," the system can set a 1-hour time and monitor the user's application usage. Various options for schedules are described in detail with reference to FIG. 2.

The system provides (330) a reminder. In some implementations, the system can place a notification on the user interface of the computing device. For example, the system can open a window that includes an appropriate option (e.g., "install now"), add a message to a notification center, play a sound, display a graphic, etc.

The system receives a user authorization (340). The system can receive the user authorization, for example, from a user interaction with the user interface of the computing device, such as pressing an "install now" button, clicking on a notification, speaking an authorization command, swiping in a direction that indicates approval. In some implementations, approval can be presumed. For example, if the system does not receive an indication that the user does not authorize the install, the system presumes that the installation is approved.

The system obtains the software component (350), for example, from a software component server. The system can request the component using an appropriate protocol, such as HTTP. The request can include an identifier for the component, a description of the component, both an identifier and a description and additional data, for example, data describing the computing device. Such an identifier can be included in the CTA, for example in an element of XML representing the CTA, such as the element illustrated in Listing 3, above. The identifier can be a string of characters that uniquely identifies the actionable component and can include a version number. A description of the component can specify the function of the component, for example, "eBook reader" or "web browser." A description of the computing device can include characteristics of the device, such as make, model, operating system, available memory, screen size, screen resolution, and so on. The software component server can use such information to identify a version of the software component appropriate for the computing device. The software component can be provided by the software component server directly to the computing device, or to the system, which can provide the software component to the computing device for installation.

The system performs (380) the installation. The system can install the component using conventional installation techniques. For example, operating systems, including operating systems on mobile devices, commonly include an "installer" component that is configured to install components on the computing device.

While this specification has largely described installing actionable components, the techniques described in this specification also apply to other computing interactions, such as completing a form. For example, an actionable component displayed on a user's computing device might offer the user the opportunity to fill out a form, e.g., to order merchandise, or to visit a web site. The actionable component installation system of this specification can determine, using the techniques described above, that the user is more likely to take the action, such as completing the form, at a later time. For example, if the user is engaged playing a game, the user is unlikely to pause the game to complete the form or visit a web site. Instead, the actionable component installation system might offer the user a remind-me-later CTA.

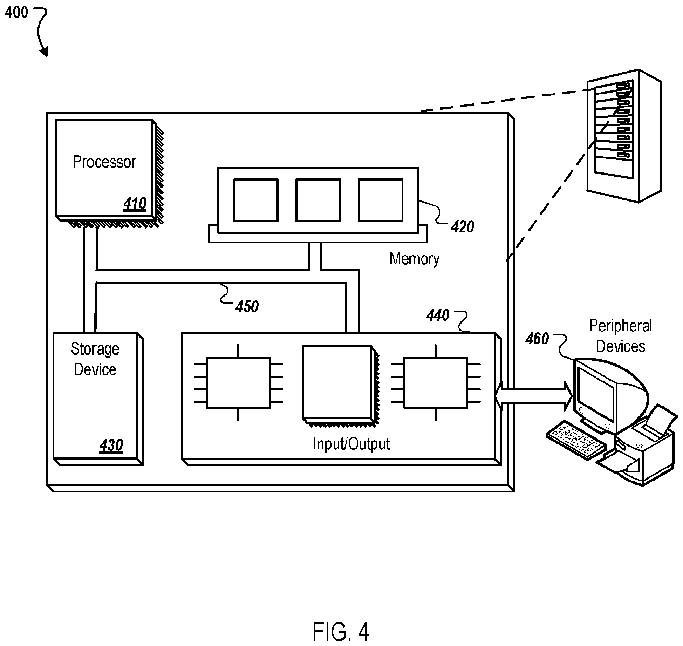

FIG. 4 is a block diagram of an example computer system 400 that can be used to perform operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 400. In one implementation, the input/output device 440 can include one or more of a network interface devices, e.g., an Ethernet card, a serial communication device, e.g., and RS-242 port, and/or a wireless interface device, e.g., and 802.11 card. In another implementation, the input/output device can include driver devices configured to receive input data and send output data to other input/output devices, e.g., keyboard, printer and display devices 470. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a computing device, e.g., for purposes of displaying data to and receiving user input from a user interacting with the device, which acts as a client. Data generated at the computing device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method comprising:
determining, by a digital component distribution system (110), to distribute, to a computing device (105) and for display at the computing device (105), a digital component (109) that depicts content related to a particular subject;
determining, by the digital component distribution system (110) and using a data processing model and contextual information for the computing device (105), to include a remind-me-later user interface control with the digital component (109); and
in response to determining to include the remind-me-later user interface control,
modifying the digital component (109) to include the remind-me-later user interface control that, when interacted with by a user, causes the computing device (105) to schedule a notification that reminds a user of the computing device (105) of the subject of the digital component (109); and
sending the digital component (109) with the remind-me-later user interface control to the computing device (105).

2. The method of claim 1, wherein the contextual information includes a metric indicating a level of user engagement with an application executing on the computing device (105).

3. The method of claim 1 or claim 2, wherein the data processing model selects the remind-me-later user interface control based on a predicted likelihood that a user will activate the user interface control.

4. The method of claim 3, wherein the predicted likelihood reflects a type of application in which the digital component (109) will be displayed.

5. The method of any of claims 1 to 4, wherein the contextual information includes a type of application with which a user is currently interacting.

6. The method of claim 5, wherein the type of application is one of a timed game, an untimed game, an ebook, a browser, or social media.

7. The method of any of claims 1 to 6, further comprising:
determining, by the digital component distribution system (110), a schedule; and
modifying, by the digital component distribution system (110), the digital component (109) to include the schedule.

8. The method of any of claims 1 to 7, wherein the modifying results in the remind-me-later user interface control obscuring content within the digital component (109).

9. The method of claim 8, wherein the contextual information includes signals from the device wherein the signals include at least one of time, geographic location and language of application.

10. A system (100) comprising one or more computers and one or more storage devices storing instructions that when executed by the one or more computers cause the one or more computers to perform the respective operations of the method of any preceding claim.

11. One or more computer-readable storage media storing instructions that when executed by one or more computers (100) cause the one or more computers (100) to perform the respective operations of the method of any of claims 1 to 9.

12. A computer program product comprising instructions which, when executed by a computer (100), cause the computer (100) to carry out the steps of the method of any of claims 1 to 9.

## Patentansprüche

1. Computerimplementiertes Verfahren, umfassend:
Bestimmen einer digitalen Komponente (109), die einen sich auf ein bestimmtes Thema beziehenden Inhalt darstellt, durch ein Digitalkomponenten-Verteilungssystem (110) zum Verteilen an eine Rechenvorrichtung (105) und zum Anzeigen an der Rechenvorrichtung (105);
Bestimmen, eine Erinnerungs-Benutzerschnittstellen-Steuerung mit der Digitalkomponente (109) zu beinhalten, durch das Digitalkomponenten-Verteilungssystem (110) und unter Verwendung eines Datenverarbeitungsmodells und kontextbezogener Informationen für die Rechenvorrichtung (105); und
als Reaktion auf das Bestimmen, die Erinnerungs-Benutzerschnittstellen-Steuerung zu beinhalten,
Modifizieren der digitalen Komponente (109), um die Erinnerungs-Benutzerschnittstellen-Steuerung zu beinhalten, die, wenn sie mit einem Benutzer interagiert, die Rechenvorrichtung (105) veranlasst, eine Benachrichtigung zu planen, die einen Benutzer der Rechenvorrichtung (105) an das Thema der digitalen Komponente (109) erinnert; und
Senden der digitalen Komponente (109) mit der Erinnerungs-Benutzerschnittstellen-Steuerung an einen späteren Zeitpunkt an die Rechenvorrichtung (105).

2. Verfahren nach Anspruch 1, wobei die kontextbezogenen Informationen eine Metrik beinhalten, die den Grad der Benutzerinteraktion mit einer auf der Rechenvorrichtung (105) ausgeführten Anwendung angibt.

3. Verfahren nach Anspruch 1 oder Anspruch 2, wobei das Datenverarbeitungsmodell die Erinnerungs-Benutzerschnittstellen-Steuerung basierend auf einer vorhergesagten Wahrscheinlichkeit auswählt, dass ein Benutzer die Benutzerschnittstellen-Steuerung aktivieren wird.

4. Verfahren nach Anspruch 3, wobei die vorhergesagte Wahrscheinlichkeit eine Art der Anwendung widerspiegelt, in der die digitale Komponente (109) dargestellt werden wird.

5. Verfahren nach einem der Ansprüche 1 bis 4, wobei die kontextbezogenen Informationen eine Art der Anwendung beinhalten, mit der ein Benutzer aktuell interagiert.

6. Verfahren nach Anspruch 5, wobei es sich bei der Art der Anwendung um ein zeitlich begrenztes Spiel, ein zeitunabhängiges Spiel, ein E-Book, einen Browser oder Social-Media handelt.

7. Verfahren nach einem der Ansprüche 1 bis 6, ferner umfassend:
Bestimmen eines Zeitplans durch das Digitalkomponenten-Verteilungssystem (110); und
Modifizieren der digitalen Komponente (109) durch das Digitalkomponenten-Verteilungssystem (110), um den Zeitplan zu beinhalten.

8. Verfahren nach einem der Ansprüche 1 bis 7, wobei das Modifizieren dazu führt, dass die Erinnerungs-Benutzerschnittstellen-Steuerung den Inhalt innerhalb der digitalen Komponente (109) verdeckt.

9. Verfahren nach Anspruch 8, wobei die kontextbezogenen Informationen Signale von der Vorrichtung beinhalten, wobei die Signale mindestens eines von Zeit, geografischem Standort und Sprache der Anwendung beinhalten.

10. System (100), umfassend einen oder mehrere Computer und eine oder mehrere Speichervorrichtungen, der/die Anweisungen speichert/speichern, die, wenn sie von dem einen oder den mehreren Computern ausgeführt werden, den einen oder die mehreren Computer dazu veranlassen, die jeweiligen Vorgänge des Verfahrens nach einem vorhergehenden Anspruch durchzuführen.

11. Ein oder mehrere computerlesbare Speichermedien, die Anweisungen speichern, die, wenn sie von einem oder mehreren Computern (100) ausgeführt werden, den einen oder die mehreren Computer (100) veranlassen, die jeweiligen Vorgänge des Verfahrens nach einem der Ansprüche 1-9 durchzuführen.

12. Computerprogrammprodukt, das Anweisungen umfasst, die bei Ausführung durch einen Computer (100) den Computer (100) veranlassen, die Schritte des Verfahrens nach einem der Ansprüche 1 bis 9 durchzuführen.

## Revendications

1. Procédé mis en œuvre par ordinateur comprenant :
le fait de déterminer, par un système de distribution de composants numériques (110), de distribuer, à un dispositif informatique (105) et d'afficher sur le dispositif informatique (105), un composant numérique (109) qui représente un contenu lié à un sujet particulier ;
le fait de déterminer, par le système de distribution de composants numériques (110) et en utilisant un modèle de traitement de données et des informations contextuelles pour le dispositif informatique (105), d'inclure une commande d'interface utilisateur de type « me rappeler plus tard » avec le composant numérique (109) ; et
en réponse au fait de déterminer d'inclure la commande d'interface utilisateur de type « me rappeler plus tard »,
le fait de modifier le composant numérique (109) pour inclure la commande d'interface utilisateur de type « me rappeler plus tard » qui, lorsqu'elle est utilisée par un utilisateur, amène le dispositif informatique (105) à planifier une notification qui rappelle à un utilisateur du dispositif informatique (105) le sujet du composant numérique (109) ; et
l'envoi du composant numérique (109) avec la commande d'interface utilisateur de type « me rappeler plus tard » au dispositif informatique (105).

2. Procédé selon la revendication 1, dans lequel les informations contextuelles comportent une métrique indiquant un niveau d'engagement d'utilisateur avec une application exécutée sur le dispositif informatique (105).

3. Procédé selon la revendication 1 ou la revendication 2, dans lequel le modèle de traitement de données sélectionne la commande d'interface utilisateur de type « me rappeler plus tard » sur la base d'une probabilité prédite qu'un utilisateur active la commande d'interface utilisateur.

4. Procédé selon la revendication 3, dans lequel la probabilité prédite reflète un type d'application dans laquelle le composant numérique (109) sera affiché.

5. Procédé selon l'une quelconque des revendications 1 à 4, dans lequel les informations contextuelles comportent un type d'application avec laquelle un utilisateur interagit actuellement.

6. Procédé selon la revendication 5, dans lequel le type d'application est l'un d'un jeu chronométré, d'un jeu non chronométré, d'un livre électronique, d'un navigateur ou d'un réseau social.

7. Procédé selon l'une quelconque des revendications 1 à 6, comprenant également :
la détermination, par le système de distribution de composants numériques (110), d'un programme ; et
la modification, par le système de distribution de composants numériques (110), du composant numérique (109) pour inclure le programme.

8. Procédé selon l'une quelconque des revendications 1 à 7, dans lequel la modification a pour résultat que la commande d'interface utilisateur de type « me rappeler plus tard » masque le contenu dans le composant numérique (109).

9. Procédé selon la revendication 8, dans lequel les informations contextuelles comportent des signaux provenant du dispositif dans lequel les signaux comportent au moins l'un des éléments suivants : l'heure, l'emplacement géographique et la langue de l'application.

10. Système (100) comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser les opérations respectives du procédé selon une quelconque revendication précédente.

11. Un ou plusieurs supports de stockage lisible par ordinateur stockant des instructions qui, lorsqu'elles sont exécutées par un ou plusieurs ordinateurs (100), amènent les un ou plusieurs ordinateurs (100) à réaliser les opérations respectives du procédé respectif selon l'une quelconque des revendications 1 à 9.

12. Produit de programme informatique comprenant des instructions qui, lorsqu'elles sont exécutées par un ordinateur (100), amènent l'ordinateur (100) à mettre en œuvre les étapes du procédé selon l'une quelconque des revendications 1 à 9.
